# EUROPEAN PATENT APPLICATION

(11) **EP 2 735 386 A2**
(43) Date of publication of application: **28.05.2014**
(21) Application number: 12833772.2
(22) Date of filing: 30.08.2012
(51) Int. Cl.: B21D 53/02, F28D 1/04

(54) **HEAT EXCHANGER AND METHOD FOR MANUFACTURING SAME**

(30) Priority: 20.09.2011 KR 20110094453
(71) Applicant: Korea Heat Exchanger Ind. Co., Ltd., Gunsan-si, Jeollabuk-do 573-540 (KR)
(72) Inventor: KANG, Ho Il, Busan 609-310 (KR)
(74) Representative: Reboussin, Yohann Mickaël Noël
(86) International application number: PCT/KR2012/006945
(87) International publication number: WO 2013/042879

(57) **Abstract**

Disclosed are a heat exchanger capable of simplifying a configuration and a manufacturing process thereof, and a manufacturing method of the heat exchanger. The manufacturing method of the heat exchanger includes arranging a pair of header boxes to be spaced apart from each other, each of the header boxes being formed using a single hollow rectangular pipe, and mounting a plurality of finned tubes to the header boxes such that one end of each finned tube is connected to any one of the header boxes and the other end of the finned tube is connected to the other one of the header boxes.

## Description

### [Technical Field]

The present invention relates to a heat exchanger and a manufacturing method thereof, and more particularly to a heat exchanger capable of simplifying a configuration and a manufacturing process thereof and a manufacturing method thereof.

### [Background Art]

Heat exchangers refer to an apparatus that transfers thermal energy of high temperature fluid to low temperature fluid. Generally, heat exchangers have been widely used in heaters, coolers, evaporators, condensers, etc.

Such heat exchangers may be classified into multi-tube heat exchangers, block heat exchangers, jacketed heat exchangers, air cooled heat exchangers, spiral heat exchangers, and plate heat exchangers based on heat exchange methods and configurations. Among these heat exchangers, air cooled heat exchangers are configured in such a manner that a fan implements forced draft of air, serving as cooling fluid, toward an outer surface of a heat transfer tube to cool fluid inside the heat transfer tube.

A typical air cooled heat exchanger includes a pair of header boxes spaced apart from each other and a plurality of finned tubes connecting the respective header boxes to each other. As a fan implements forced draft of air toward outer surfaces of the finned tubes, internal fluid passing through the finned tubes may be cooled.

Due to the fact that header boxes have conventionally been manufactured by welding thick steel plates (having a minimum thickness of 20~25 mm), there are problems of troublesome and inconvenient manufacturing processes and increased manufacturing time and costs.

That is, conventional processes of manufacturing a hollow rectangular header box by welding four thick steel plates are very complex and not efficient in terms of productivity, and increase manufacturing costs.

Moreover, because the respective steel plates constructing the header box are connected to one another via welding, the conventional manufacturing processes have problems of a high defect rate of welded joints between the steel plates as well as leakage possibility of internal fluid from the welded joints.

Accordingly, although various studies with regard to heat exchangers capable of simplifying a manufacturing process and improving stability have recently been conducted, these studies are still insufficient and there exists an urgent demand for improved heat exchangers as mentioned above.

### [Disclosure]

### [Technical Problem]

Therefore, the present invention has been made in view of the above problems, and it is one object of the present invention to provide a heat exchanger capable of simplifying a manufacturing process and enhancing production efficacy, and a manufacturing method thereof.

In particular, it is another object of the present invention to provide a heat exchanger having a header box capable of eliminating or minimizing a welding process, and a manufacturing method thereof.

Further, it is another object of the present invention to provide a heat exchanger capable of reducing manufacturing time and manufacturing costs, and a manufacturing method thereof.

Furthermore, it is a further aspect of the present invention to provide a heat exchanger capable of enhancing stability and reliability, and a manufacturing method thereof.

### [Technical Solution]

In accordance with one exemplary embodiment of the present invention, the above and other objects can be accomplished by the provision of a method of manufacturing a heat exchanger, the method including arranging a pair of header boxes to be spaced apart from each other, each of the header boxes being formed using a single hollow rectangular pipe, and mounting a plurality of finned tubes to the header boxes such that one end of each finned tube is connected to any one of the header boxes and the other end of the finned tube is connected to the other one of the header boxes.

In the present invention, forming the header box as a seamless single hollow rectangular pipe may be understood as forming the header box as a single hollow rectangular pipe having no or only one straight seam without requiring connection of several steel plates via welding as adopted in the related art.

The header box in the form of a single hollow rectangular pipe may be provided in various ways according to requirements and design specifications. In one example, the header box may be formed using a hollow rectangular pipe acquired via extrusion processing. As occasion demands, the header box may be formed using a seamless hollow rectangular pipe acquired via other processing.

In another example, the header box may be formed using a hollow rectangular pipe that is formed by a plurality of rollers moving on an outer surface of a hollow circular pipe. In this case, for example, the hollow circular pipe may be pressed and molded into the hollow rectangular shape by four rollers arranged respectively at upper, lower, left and right sides of the hollow circular pipe as the rollers are iteratively moved in a longitudinal direction of the hollow circular pipe. The number and arrangement of the rollers may be changed in various ways according to requirements and design specifications. In addition, the shape of the rollers, the number of times the rollers are moved, and the pressure of the rollers may be appropriately changed according to requirements and design specifications.

More specifically, after a single hollow circular pipe is first prepared, the hollow circular pipe may be moved in a longitudinal direction thereof and then may be molded into a hollow rectangular pipe via plastic deformation in plural stages. In addition, the plastic deformation of the hollow circular pipe in plural stages may be accomplished by pressing the hollow circular pipe using rollers that are moved on the outer surface of the hollow circular pipe relative to the hollow circular pipe.

Both ends of the finned tubes are connected to the respective header boxes. Each of the header boxes may be provided at one surface thereof with insertion holes for insertion of the ends of the finned tubes, and the ends of the finned tubes having passed through the insertion holes may be fixed by fixing means within the header box. To this end, the other surface of the header box may be provided with introduction holes at positions adjacent to the respective insertion holes for introduction of the fixing means into the header box. In one example, the introduction holes may be formed in the other surface of the header box facing the insertion holes so as to be arranged on the same line as the respective insertion holes. As occasion demands, the introduction holes may be formed in an upper surface or a lower surface of the header box. In addition, after the ends of the finned tubes are fixed by the fixing means, the introduction holes may be finished by finishing members.

For reference, in the present invention, various means capable of fixing one end of each finned tube to the corresponding header box may be used as the fixing means, and the present invention is not restricted or limited by the kinds and characteristics of the fixing means. In one example, the fixing means may be configured to fix one end of each finned tube to the corresponding header box via welding. As occasion demands, the fixing means may be configured to increase a diameter of the end of the finned tube so as to fix the end of the finned tube to the header box.

In addition, a partition may be provided in the header box to divide an inner space of the header box. In one example, a horizontal partition may divide the inner space of the header box into two independent upper and lower spaces. As such, internal fluid passing through the inner space of the header box may move in the respective spaces independently divided by the partition. As occasion demands, a plurality of partitions may be provided, and the arrangement direction and configuration of the partitions may be appropriately changed according to requirements and design specifications.

The partition may be mounted in various ways according to requirements and design specifications. In one example, the partition and the header box may be welded to each other using a welding device. The welding device includes a welding rod having a length corresponding to a joint section between the header box and the partition, a welding rod guide configured to linearly move through the interior of the header box to guide a tip end of the welding rod to the joint section, a guide roller located at the outside of the header box to guide linear movement of the welding rod guide, and a transfer unit configured to linearly move the welding rod guide. The partition and the header box may be welded to each other by the welding rod during linear movement of the welding rod guide.

In addition, the guide body may be provided with a support roller to achieve more stable linear movement of the welding rod guide. The support roller may perform rolling while coming into close contact with an inner surface of the header box.

In accordance with another exemplary embodiment of the present invention, there is provided a heat exchanger including a pair of header boxes spaced apart from each other, and a plurality of finned tubes, each of which has one end connected to any one of the header boxes and the other end connected to the other one of the header boxes, wherein each of the header boxes takes the form of a single hollow rectangular pipe.

In one example, the header box may be formed using a hollow rectangular pipe acquired via extrusion processing. In another example, the header box may be formed by preparing a single hollow circular pipe, moving the hollow circular pipe in a longitudinal direction thereof, and molding the hollow circular pipe into a hollow rectangular pipe by performing plastic deformation on the hollow circular pipe in plural stages. The hollow circular pipe may be pressed and plastic deformed by rollers moving on an outer surface of the hollow circular pipe relative to the hollow circular pipe. Here, the hollow circular pipe may be any one of a seamless hollow circular pipe and a hollow welded pipe having a single straight seam.

In addition, each of the header boxes may be provided at one surface thereof with insertion holes for insertion of the ends of the finned tubes, and the ends of the finned tubes having passed through the insertion holes may be fixed by fixing means within the header box. The other surface of the header box may be provided with introduction holes for introduction of the fixing means into the header box.

Meanwhile, a partition configured to divide an inner space of each header box may be provided. The partition may be welded to the header box. In one example, the partition and the header box may be welded to each other using a welding device, and the welding device may include a welding rod having a length corresponding to a joint section between the header box and the partition, a welding rod guide configured to linearly move through the interior of the header box to guide a tip end of the welding rod to the joint section, a guide roller located at the outside of the header box to guide linear movement of the welding rod guide, and a transfer unit configured to linearly move the welding rod guide.

### [Advantageous Effects]

With a heat exchanger and a manufacturing method thereof according to the present invention, a simplified configuration and manufacturing process may be accomplished.

In particular, according to the present invention, a header box having a long length (for example, 8m) may take the form of a single hollow rectangular pipe capable of eliminating or minimizing a welding process, which may result in a simplified configuration and manufacturing process and enhance production efficacy. That is, since the header box may take the form of a single hollow rectangular pipe without requiring connection of several steel plates via welding for the manufacture of a header box as adopted in the related art, the header box may have a simplified configuration, and time and costs required to manufacture the header box may be reduced.

Further, according to the present invention, since the header box takes the form of a hollow rectangular pipe capable of eliminating or minimizing a welding process, it may be possible to minimize welding defects and leakage at welding joints, and to enhance stability and reliability. Moreover, the header box capable of eliminating or minimizing a welding joint may result in enhanced rigidity and strength.

Furthermore, according to the present invention, the header box may be formed by cold working a seamless single hollow circular pipe or a hollow welded pipe having a single straight seam, which ensures simplified manufacture of the header box.

In addition, according to the present invention, the header box is provided at one surface thereof with introduction holes such that fixing means are introduced into the header box through the introduction holes. Thereby, even in the case in which the header box has a long length of 8m, for example, the fixing means may be freely arranged at specific positions within the header box regardless of the length of the header box.

Finally, according to the present invention, an inner space of the header box may be divided by a partition, and the partition may be continuously welded to the header box using a welding device including a welding rod and a welding rod guide.

### [Description of Drawings]

FIG. 1 is a view showing a heat exchanger according to the present invention;
FIG. 2 is a view showing a header box of the heat exchanger according to the present invention;
FIG. 3 is an explanatory view of one process of manufacturing the header box of the heat exchanger according to the present invention;
FIG. 4 is an explanatory view of another process of manufacturing the header box of the heat exchanger according to the present invention;
FIG. 5 is a view showing a heat exchanger according to another embodiment of the present invention; and
FIGS. 6 to 9 are explanatory views of a process of manufacturing the heat exchanger according to the another embodiment of the present invention.

### [Best Mode]

Hereinafter, exemplarily embodiments of the present invention will be described in detail with reference to the accompanying drawings, but the present invention is not limited or restricted by the embodiments. For reference, in the following description, the same reference numerals designate substantially the same elements, and may quote and explain descriptions of different drawings under the aforementioned rule. Descriptions judged as clear to those skilled in the art or repeated descriptions may be omitted.

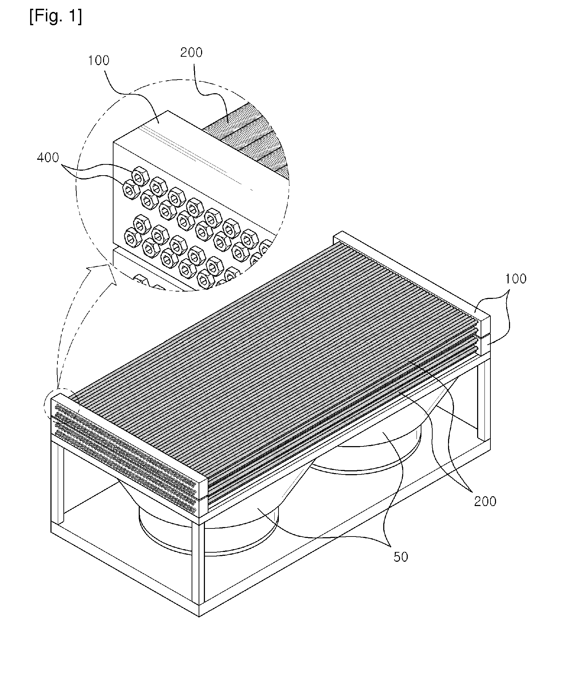

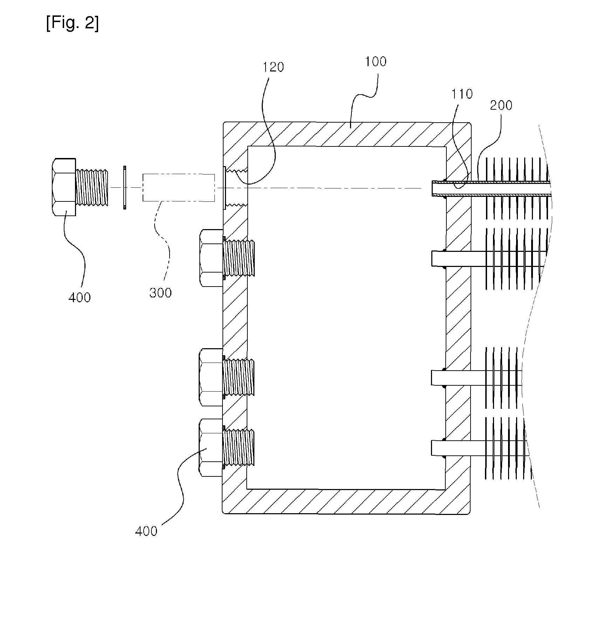

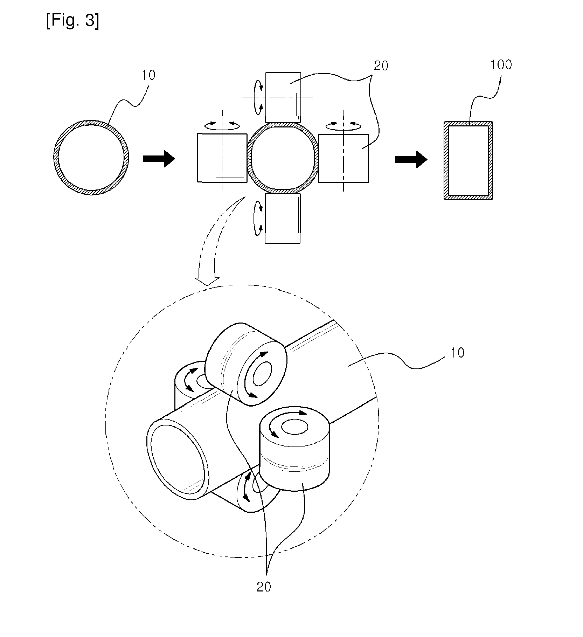

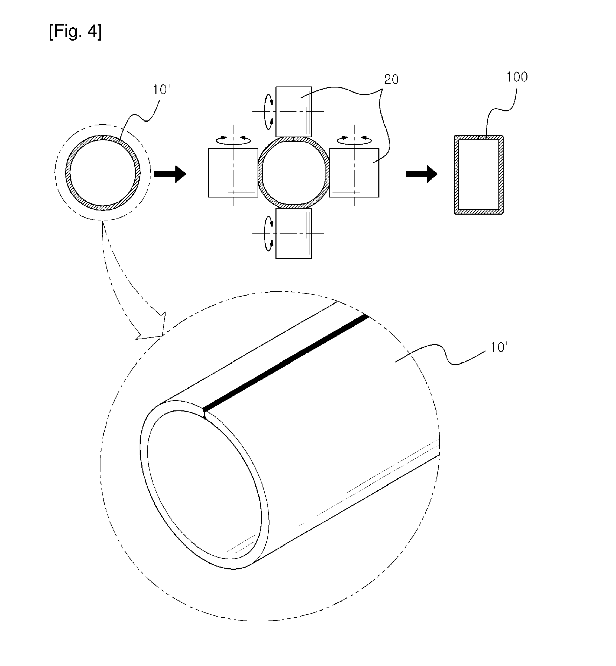

FIG. 1 is a view showing a heat exchanger according to the present invention, FIG. 2 is a view showing a header box of the heat exchanger according to the present invention, FIG. 3 is an explanatory view of one process of manufacturing the header box of the heat exchanger according to the present invention, and FIG. 4 is an explanatory view of another process of manufacturing the header box of the heat exchanger according to the present invention.

As exemplarily shown in FIGS. 1 to 3, the heat exchanger according to the present invention includes a pair of header boxes 100 and finned tubes 200. While internal fluid passes through the finned tubes 200, the internal fluid may be cooled as a fan 50 implements forced draft of air toward outer surfaces of the finned tubes 200.

The header boxes 100 take the form of a seamless single hollow rectangular pipe respectively, and are spaced apart from each other by a prescribed distance.

In the present invention, forming the header box 100 as a seamless single hollow rectangular pipe may be understood as forming the header box 100 as a single hollow rectangular pipe having no or only one straight seam without requiring connection of several steel plates via welding as adopted in the related art.

The header box 100 in the form of a seamless single hollow rectangular pipe may be provided in various ways according to requirements and design specifications. In one example, the header box 100 may be formed using a hollow rectangular pipe directly acquired via extrusion processing. As occasion demands, a seamless hollow rectangular pipe may be formed via other processing and a header box may be constructed using the resulting hollow rectangular pipe.

In another example, the header box 100 may be formed using a hollow rectangular pipe that is formed by a plurality of rollers moving on an outer surface of a hollow circular pipe 10. Hereinafter, a configuration in which the hollow circular pipe 10 is pressed and molded into a hollow rectangular shape by four rollers 20 arranged at upper, lower, left and right sides of the hollow circular pipe 10 as the rollers 20 are iteratively moved in a longitudinal direction of the hollow circular pipe 10 will be described by way of example.

More specifically, after the seamless single hollow circular pipe 10 is first prepared, the hollow circular pipe 10 is moved in a longitudinal direction thereof and then is subjected to plastic deformation in plural stages, whereby the hollow circular pipe 10 may be molded into a hollow rectangular pipe.

In addition, the plastic deformation of the hollow circular pipe 10 in plural stages may be accomplished by pressing the hollow circular pipe 10 using the rollers 20 that are moved on the outer surface of the hollow circular pipe 10 relative to the hollow circular pipe 10. That is, the hollow circular pipe 10 may be plastic deformed stepwise as the rollers 20 are iteratively moved.

Although the embodiment of the present invention describes use of four rollers by way of example, the number and arrangement of the rollers may be changed in various ways according to requirements and design specifications. In addition, the shape of the rollers, the number of times the rollers are moved, and the pressure of the rollers may be appropriately changed according to requirements and design specifications.

The header box 100 as described above may contain various materials and dimensions according to requirements and design specifications. In one example, the header box 100 may be formed of at least any one of carbon steel, stainless steel, and alloy steel, and may have a thickness in a range of 20~25 mm, a width in a range of 100~200 mm, a height in a range of 240~550 mm, and a length of 8~12 m.

One end of the respective finned tubes 200 is connected to any one of the header boxes 100 and the other end is connected to the other one of the header boxes 100. Various finned tubes typically used in heat exchangers may be used as the finned tubes 200. The present invention is not restricted or limited by the kinds and characteristics of the finned tubes 200. Preferably, the finned tubes 200 may have a configuration to maximize a heat transfer area (or a heat exchange area).

The number and arrangement of the finned tubes 200 may be changed in various ways according to requirements and design specifications. In one example, approximately several hundred finned tubes 200 may be arranged in multiple layers between the header boxes 100.

As described above, both ends of the finned tubes 200 are connected to the respective header boxes 100. To this end, each header box 100 has insertion holes 110 formed in one surface thereof for insertion of the ends of the finned tubes 200. The ends of the finned tubes 200 having passed through the insertion holes 110 may be fixed within the header box 100 by fixing means.

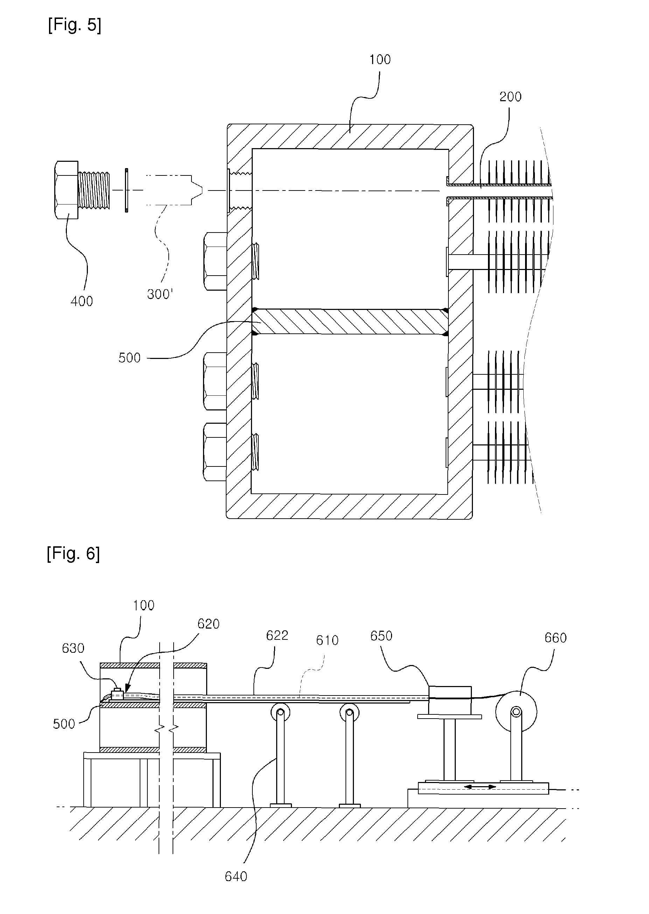

For reference, various means capable of fixing one end of each finned tube 200 to the corresponding header box 100 may be used as the fixing means, and the present invention is not restricted or limited by the kinds and characteristics of the fixing means. In one example, a typical welder 300 may be used as the fixing means. The end of the finned tube 200 may be welded and fixed to the header box 100 by the welder 300. In another example, an expander (see reference numeral 300' of FIG. 5) may be used to expand the end of the finned tube 200 such that the end of the finned tube 200 has a greater diameter than a diameter of the insertion hole 110. As the end of the finned tube 200 is expanded by the expander 300', the end of the finned tube 200 may be fixed to the header box 100.

Meanwhile, although the above described fixing means may be introduced into the header box 100 through a longitudinal end of the header box 100 when the header box 100 has a short length, it may be difficult to introduce and arrange the fixing means 300; 300' when the header box 100 has a very long length up to about 8 m.

To solve the above described problem, the header box 100 may have a plurality of introduction holes 120 formed in the other surface of the header box 100 at positions adjacent to the respective insertion holes 110 for introduction of the fixing means 300; 300' into the header box 100. Hereinafter, one example in which the introduction holes 120 are formed in the other surface of the header box 100 facing the insertion holes 110 so as to be arranged on the same line as the respective insertion holes 110 will be described. As occasion demands, the introduction holes 120 may be formed in an upper surface or a lower surface of the header box 100.

The introduction holes 120 may have a size and shape suitable for smooth introduction of the fixing means 300; 300'. In one example, the introduction holes 120 may be formed to correspond to the insertion holes 110 in a one to one ratio, and the fixing means 300; 300' may be individually introduced through the respective introduction holes 120 to fix the ends of the finned tubes 200 corresponding to the respective insertion holes 110. As occasion demands, one fixing means, which is inserted through a single introduction hole (or plural introduction holes) having a relatively large size, may function to fix the ends of the plural finned tubes 200 corresponding to the different insertion holes 110.

After the ends of the finned tubes 200 are fixed by the fixing means 300; 300', the introduction holes 120 may be finished by finishing members 400. In one example, the finishing members 400 may finish the introduction holes 120 via a conventional screw fastening method, and as occasion demands, may finish the introduction holes 120 in various other manners.

In addition, a typical sealing member may be provided at a connection region between each finned tube 200 connected to the header box 100 and the corresponding finishing member 400 to prevent leakage of internal fluid passing through an inner space of the header box 100.

Meanwhile, although the above embodiment has described the header box 100 in the form of a seamless single hollow rectangular pipe by way of example, as occasion demands, the header box 100 may take the form of a single hollow rectangular pipe having a single straight seam.

More specifically, referring to FIG. 4, similar to the above described embodiment, a header box may be acquired by preparing a single hollow circular pipe 10', moving the hollow circular pipe 10' in a longitudinal direction thereof, and molding the hollow circular pipe 10' into a hollow rectangular pipe by performing plastic deformation on the hollow circular pipe 10' in plural stages. A hollow welded pipe having a single straight seam may be used as the hollow circular pipe 10'.

For reference, in the present invention, the hollow welded pipe having the single straight seam refers to a pipe acquired by rolling a steel plate into a circular tubular form using a typical exclusive machine and thereafter welding a seam of the tubular steel plate. The fabricated hollow welded pipe having the single straight seam may have a greater diameter than a diameter of the above described seamless hollow circular pipe. In the case of the above described seamless hollow circular pipe having a thickness in a range of 20~25 mm, normal production thereof is possible so long as a diameter of the seamless hollow circular pipe is within a range of approximately 12~14 inches. However, when a diameter of the seamless hollow circular pipe exceeds approximately 14 inches, production of the seamless pipe is difficult. On the other hand, in the case of the hollow welded pipe having the single straight seam, production up to a diameter in a range of approximately 14~18 inches is possible.

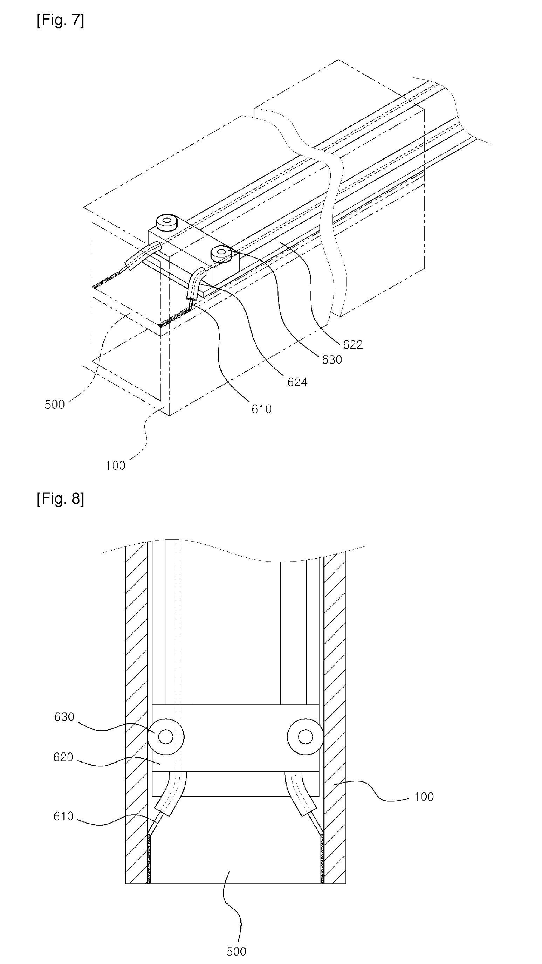

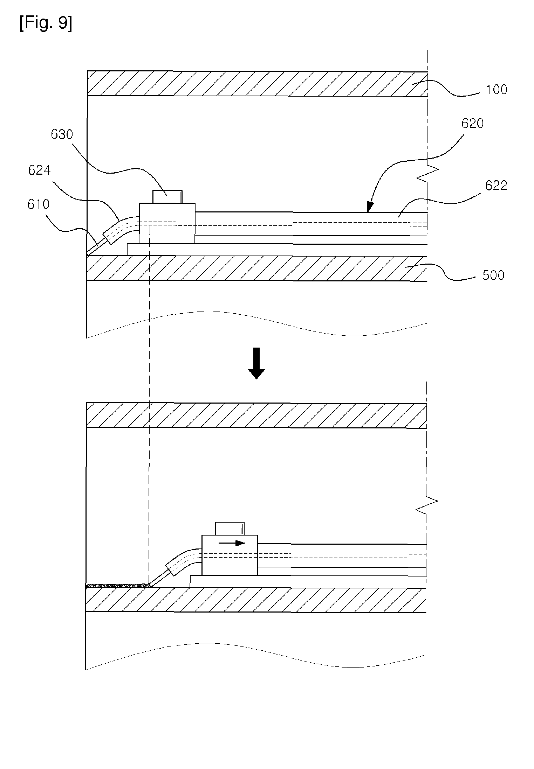

FIG. 5 is a view showing a heat exchanger according to another embodiment of the present invention, and FIGS. 6 to 9 are explanatory views of a process of manufacturing the heat exchanger according to the another embodiment of the present invention. In addition, the same or like parts as those of the above described configuration are designated by the same or like reference numerals, and a detailed description thereof will be omitted hereinafter.

Referring to FIG. 5, according to the another embodiment of the present invention, a partition 500 may be provided in the above described header box 100 to divide an inner space of the header box 100. In one example, the horizontal partition 500 may divide the inner space of the header box 100 into two independent upper and lower spaces. As such, internal fluid passing through the inner space of the header box 100 may move in the respective spaces independently divided by the partition 500. As occasion demands, a plurality of partitions may be provided, and the partitions may be vertically or obliquely arranged.

The partition 500 may be mounted in various ways according to requirements and design specifications. In one example, the partition 500 may be mounted via welding.

Referring to FIGS. 6 to 9, the partition 500 and the header box 100 may be welded to each other using a welding device. The welding device includes a welding rod 610 having a length corresponding to a joint section between the header box 100 and the partition 500, a welding rod guide 620 configured to linearly move through the interior of the header box 100 to guide a tip end of the welding rod 610 to the joint section, guide rollers 640 located at the outside of the header box 100 to guide linear movement of the welding rod guide 620, and a transfer unit 650 configured to linearly move the welding rod guide 620. The partition 500 and the header box 100 may be welded to each other by the welding rod 610 during linear movement of the welding rod guide 620.

The welding rod guide 620 may include a guide body 622 configured to be linearly movable through the interior of the header box 100, and a guiding portion 624 integrated at a tip end of the guide body 622 to guide the tip end of the welding rod 610 to the joint section.

The guide rollers 640 may support a lower surface of the guide body 622 when the guide body 622 is exposed to the outside of the header box 100. In addition, the number and arrangement interval of the guide rollers 640 may be changed in various ways according to requirements and design specifications. Alternatively, guide rollers may be configured to support a lateral surface or an upper surface of the guide body 622 as well as the lower surface of the guide body 622.

The transfer unit 650 may be integrally connected to a rear end of the welding rod guide 620. The transfer unit 650 may be linearly moved using typical rails or rollers upon receiving drive power of a motor, thereby linearly moving the welding rod guide 620.

In addition, although the welding rod 610 continuously wound on a winding roll 660 may be provided, as occasion demands, welding rods cut by a prescribed length may be provided.

For reference, the joint section between the header box 100 and the partition 500 may be understood as an entire section where welding between the header box 100 and the partition 500 is implemented. The welding rod 610 may have a length approximately equal at least to a length of the header box 100 (or the partition 500).

In addition, both lateral ends of the partition 500 may be simultaneously welded by a pair of welding rods 610. That is, two welding rods 610 may be spaced apart from each other by a prescribed distance, and may be simultaneously guided by respective welding rod guides 620.

With the above described configuration, after the partition 500 is placed in the header box 100, the welding rod 610 and the welding rod guide 620 are introduced into the header box 100. In such a state, the welding rod guide 620 is moved in a longitudinal direction of the header box 100 to guide the tip end of the welding rod 610 (where welding will be implemented) to a welding region. As the welding rod 610 melts, welding between the partition 500 and the header box 100 may be completed.

In addition, to ensure that the welding rod guide 620 implement more stable linear movement, the guide body 622 may be provided with a support roller 630. During linear movement of the guide body 622, the support roller 630 may perform rolling while coming into close contact with an inner surface of the header box 100.

Although the embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of manufacturing a heat exchanger, the method comprising:
arranging a pair of header boxes to be spaced apart from each other, each of the header boxes being formed using a single hollow rectangular pipe; and
mounting a plurality of finned tubes to the header boxes such that one end of each finned tube is connected to any one of the header boxes and the other end of the finned tube is connected to the other one of the header boxes.

2. The method according to claim 1, wherein provision of each header box includes:
preparing a single hollow circular pipe; and
molding the hollow circular pipe into a hollow rectangular pipe by moving the hollow circular pipe in a longitudinal direction thereof and performing plastic deformation on the hollow circular pipe in plural stages.

3. The method according to claim 2, wherein the hollow circular pipe is any one of a seamless hollow circular pipe and a hollow welded pipe having a single straight seam.

4. The method according to claim 2, wherein the plastic deformation of the hollow circular pipe in plural stages includes pressing the hollow circular pipe using a roller moving on an outer surface of the hollow circular pipe relative to the hollow circular pipe.

5. The method according to claim 1, wherein the mounting the plurality of finned tubes includes fixing the end of each finned tube, having passed through an insertion hole formed in one surface of the corresponding header box, to the header box, and
wherein the end of the finned tube is fixed by fixing means introduced into the header box through an introduction hole formed in the other surface of the header box.

6. The method according to claim 5, wherein the end of the finned tube is welded or expanded via the fixing means so as to be fixed to the header box.

7. The method according to claim 5, further comprising mounting a finishing member to finish the introduction hole.

8. The method according to claim 1, further comprising mounting a partition configured to divide an inner space of each header box,
wherein the partition is welded to the header box.

9. The method according to claim 8, wherein the mounting the partition includes:
arranging the partition within the header box;
providing a welding device including a welding rod having a length corresponding to a joint section between the header box and the partition, a welding rod guide configured to linearly move through the interior of the header box to guide a tip end of the welding rod to the joint section, a guide roller located at the outside of the header box to guide linear movement of the welding rod guide, and a transfer unit configured to linearly move the welding rod guide; and
welding the partition and the header box to each other via the welding rod while linearly moving the welding rod guide.

10. The method according to claim 9, wherein the welding device includes:
a guide body configured to be linearly movable through the interior of the header box; and
a guiding portion integrated with the guide body to guide the tip end of the welding rod to the joint section.

11. The method according to claim 9, wherein the guide body is provided with a support roller, and
wherein the support roller performs rolling while coming into close contact with an inner surface of the header box during linear movement of the guide body.

12. The method according to claim 1, wherein the hollow rectangular pipe is formed of at least any one material of carbon steel, stainless steel, and alloy steel.

13. A heat exchanger comprising:
a pair of header boxes spaced apart from each other; and
a plurality of finned tubes, each of which has one end connected to any one of the header boxes and the other end connected to the other one of the header boxes,
wherein the header boxes being formed using a single hollow rectangular pipe.

14. The heat exchanger according to claim 13, wherein each of the header boxes takes the form of a single hollow rectangular pipe acquired by preparing a single hollow circular pipe, moving the hollow circular pipe in a longitudinal direction thereof, and performing plastic deformation on the hollow circular pipe by pressing an outer surface of the hollow circular pipe using a roller moving on the outer surface of the hollow circular pipe relative to the hollow circular pipe.

15. The heat exchanger according to claim 14, the hollow circular pipe is any one of a seamless hollow circular pipe and a hollow welded pipe having a single straight seam.

16. The heat exchanger according to claim 14, wherein the plastic deformation of the hollow circular pipe includes pressing the hollow circular pipe using a roller moving on an outer surface of the hollow circular pipe relative to the hollow circular pipe.

17. The heat exchanger according to claim 13, wherein the each of the header boxes provided at one surface thereof with insertion holes for insertion of the ends of the finned tubes, and the ends of the finned tubes having passed through the insertion holes fixed by fixing means within the header box,
and wherein the other surface of the header box provided with introduction holes at positions adjacent to the respective insertion holes for introduction of the fixing means into the header box.

18. The heat exchanger according to claim 17, wherein the end of the finned tube is welded or expanded via the fixing means so as to be fixed to the header box.

19. The heat exchanger according to claim 17, wherein the the introduction holes formed in the other surface of the header box facing the insertion holes.

20. The heat exchanger according to claim 17, further comprising a finishing member to finish the introduction hole.

21. The heat exchanger according to claim 13, further comprising a partition configured to divide an inner space of each header box,
wherein the partition is welded to the header box.

22. The heat exchanger according to claim 21, wherein the partition is mounted within the header box by providing a welding device, wherein the welding device includes a welding rod having a length corresponding to a joint section between the header box and the partition, a welding rod guide configured to linearly move through the interior of the header box to guide a tip end of the welding rod to the joint section, a guide roller located at the outside of the header box to guide linear movement of the welding rod guide, and a transfer unit configured to linearly move the welding rod guide, and continuously welding the partition and the header box to each other using the welding rod during linear movement of the welding rod guide.

23. The heat exchanger according to claim 22, wherein the wielding rod guide includes:
a guide body configured to be linearly movable through the interior of the header box; and
a guiding portion integrated with the guide body to guide the tip end of the welding rod to the joint section.

24. The heat exchanger according to claim 23, wherein the guide body is provided with a support roller configured to perform rolling while coming into close contact with an inner surface of the header box during linear movement of the guide body.
